# EUROPEAN PATENT APPLICATION

(11) **EP 2 806 329 A2**
(43) Date of publication of application: **26.11.2014**
(21) Application number: 14160788.7
(22) Date of filing: 19.03.2014
(51) Int. Cl.: G05F 1/575

(54) **Circuit for voltage regulation**

(30) Priority: 21.05.2013 US 201313899083
(71) Applicant: NXP B.V., 5656 AG Eindhoven (NL)
(72) Inventor: Van Dijk, Luc, Redhil, Surrey RH1 1SH (GB)
(74) Representative: Crawford, Andrew

(57) **Abstract**

A voltage regulator circuit is provided that includes a pass circuit including a field effect transistor (FET) having a gate coupled to the output of a comparison circuit. The comparison circuit is configured to provide a signal to the pass circuit that is based on a comparison of a first input coupled to a reference voltage and a second input. The voltage regulator includes a feedback path configured and arranged to provide feedback from an output of the pass circuit to a second input of the comparison circuit. The voltage regulator also includes a current adjustment circuit configured and arranged to adjust current consumed by the comparison circuit based on a current passed by the pass circuit.

## Description

Voltage regulator circuits are often used in electronic devices to generate a stable output voltage from a relatively inconsistent power source. For instance, voltage provided by a power source may fluctuate due to environmental noise or various characteristics of the power supply. A voltage regulator adjusts power provided at an output to maintain a more consistent output voltage relative to the power source.

Various example embodiments are directed to voltage regulator circuits and their implementation.

In one embodiment, an integrated circuit (IC) having a voltage regulator circuit is provided. The voltage regulator circuit includes a pass circuit including a field effect transistor (FET) having a gate coupled to the output of a comparison circuit. The comparison circuit is configured to provide a signal to the pass circuit that is based on a comparison of a first input coupled to a reference voltage and a second input. The voltage regulator includes a feedback path configured and arranged to provide feedback from an output of the pass circuit to a second input of the comparison circuit. The voltage regulator also includes a current adjustment circuit configured and arranged to adjust current consumed by the comparison circuit based on a current passed by the pass circuit.

In another embodiment, an IC having a voltage regulator circuit is provided that includes a pass circuit having a FET gate coupled to the output of a comparison circuit. The comparison circuit is configured to provide a signal to the pass circuit that is based on a comparison of a first input coupled to a reference voltage and a second input. The voltage regulator includes a feedback path configured and arranged to provide feedback from an output of the pass circuit to a second input of the comparison circuit. The feedback path includes a first capacitor coupled to provide feedback from the output of the pass circuit to the second input of the comparison circuit and includes a second capacitor coupled to provide feedback from the output of the comparison circuit to the second input of the comparison circuit.

The above discussion/summary is not intended to describe each embodiment or every implementation of the present disclosure. The figures and detailed description that follow also exemplify various embodiments.

Various example embodiments may be more completely understood in consideration of the following detailed description in connection with the accompanying drawings, in which:
FIG. 1 shows a block diagram of a first voltage regulator circuit in accordance with one or more embodiments of the present disclosure;
FIG. 2 shows a block diagram of a second voltage regulator circuit in accordance with one or more embodiments of the present disclosure; and
FIG. 3 shows a detailed circuit diagram of a voltage regulator circuit in accordance with one or more embodiments of the present disclosure.

While various embodiments discussed herein are amenable to modifications and alternative forms, aspects thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

One or more example embodiments are directed to a regulator circuit. In one example embodiment, a voltage regulator circuit is provided that includes a pass circuit controlled by a comparison circuit. The comparison circuit is configured to provide a signal to the pass circuit that is based on a comparison of a first input coupled to a reference voltage and a second input. The voltage regulator circuit includes a feedback path configured and arranged to provide feedback from an output of the pass circuit to a second input of the comparison circuit. The voltage regulator circuit also includes a current adjustment circuit configured to adjust current consumed by the comparison circuit based on a current passed by the pass circuit.

In some embodiments, the feedback circuit is configured to provide feedback from an output of the voltage regulator circuit, and from an output of the comparison circuit, to the second input of the comparison circuit. In one implementation, the feedback circuit includes a first capacitor connected to provide a feedback path from the output of the voltage regulator circuit to the second input of the comparison circuit. The feedback circuit also includes a second capacitor providing a feedback path from the output of the comparison circuit to the input of the comparison circuit. In some embodiments, the feedback path further includes a resistor divider network configured to provide feedback from the output of the pass circuit to the second input of the comparison circuit. In some embodiments, a voltage regulator circuit includes a feedback circuit having first and second capacitors as described above with the current adjustment circuit omitted.

In some embodiments, a voltage regulator circuit may include a number of optional components in various combinations. For example, in some embodiments, the voltage regulator circuit includes a circuit configured to prevent over-current through the pass circuit that may damage the voltage regulator circuit. For instance, in some embodiments, the voltage regulator circuit includes a circuit configured to monitor current through the pass circuit and an over-current control circuit configured to cause an adjustment circuit drain voltage of the output of the transconductance (GM) amplifier in response to the monitored current exceeding an upper threshold current. Reducing the voltage at the output of the transconductance amplifier reduces the voltage of error signal and causes the pass circuit to reduce the amount of current passed.

In some embodiments, the voltage regulator circuit includes an over-temperature control circuit configured to prevent the voltage regulator circuit from operating in temperature ranges that may damage circuitry of the voltage regulator circuit. For instance, in one example implementation, the over-temperature control circuit is configured to adjust the error signal to disable the pass gate. In another example implementation, the over-temperature control circuit is configured to cause a switch (not shown) to disconnect the voltage regulator circuit from the power supply. Other implementations may be used as well.

In some embodiments, the voltage regulator circuit includes an output regulator circuit, which provides a current sink that improves performance of the voltage regulator circuit. In some embodiments, the voltage regulator circuit includes a reference voltage generator circuit that is configured to provide the reference voltage to an input of the comparison circuit.

In some embodiments, the voltage regulator circuit includes a charge pump configured to generate a higher voltage from a lower supply voltage and provide the higher voltage to power the comparison circuit. For instance, the charge pump may be configured to provide the higher voltage in response to the lower supply voltage falling below a lower threshold.

A skilled artisan will recognize that the comparison circuit and pass circuit, as discussed in connection with various embodiments, may be implemented using a variety of gate driven amplifier circuits. For example, the pass circuit may be implemented using one or more FET based transistors. Such a transistor may include, for example, a MOSFET coupled in a pull-up configuration with a voltage source and driven by the reference voltage. In some other embodiments, the pass circuit may be implemented using a CMOS driver circuit, an operational amplifier, or other circuit with similar functionality. As another example, in some embodiments, the comparison circuit includes a GM amplifier and a buffer circuit connected in series. For ease of description and illustration, the following examples describe pass circuits as being implemented using a pull-up FET and the comparison circuit as including a GM amplifier and a buffer circuit. However, it is to be understood that other circuits can be used, in connection with these and other embodiments, to effect functions similar to those functions characterized in accordance with the pass circuits described in the following. One skilled in the art will recognize that other circuit arrangements may be used to perform the functions of the various circuits described herein.

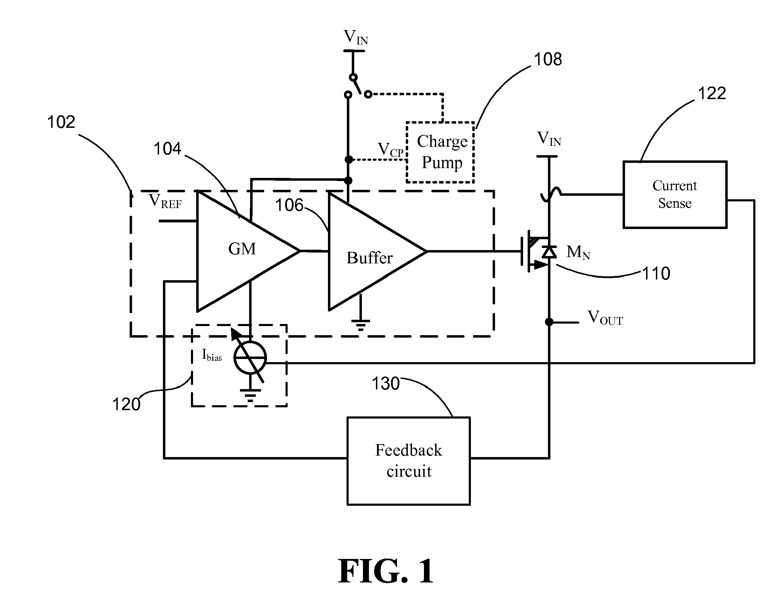

Turning now to the figures, FIG. 1 shows a block diagram of a first voltage regulator circuit in accordance with one or more embodiments of the present disclosure. The voltage regulator circuit includes a pass circuit 110 (*e.g.*, N-type FET) configured to pass current from an unregulated supply (Vin) to an output (Vout) in response to an error signal indicative of a difference between a voltage at the output and a reference voltage signal. A comparison circuit 102 is configured to generate the error signal based on a comparison of feedback from the output to a reference voltage. Feedback from the output is provided to an input of the comparison circuit 102 by feedback circuit 130.

In some embodiments, the comparison circuit 102 includes a transconductance amplifier 104 configured to provide the error signal based on a comparison of the feedback and the reference voltage. In some embodiments, the comparison circuit 102 further includes a buffer circuit 106 configured to receive and provide the error signal to the pass circuit while isolating the high output resistance of the transconductance amplifier 104 from high load capacitance of the pass circuit 110. In some implementations, the buffer circuit 106 is configured to provide a GM boost to the error signal output from the transconductance amplifier 104.

A current adjustment circuit (120, 122) is configured to adjust the amount of current consumed by the comparison circuit based on the amount of current passed by the pass circuit. In some embodiments, the current adjustment circuit includes an adjustable current source 120 and a current sense circuit 122. The adjustable current source is configured and arranged to adjust a tail current of the comparison circuit based on a control signal from the current sense circuit that is indicative of the amount of current passed by the pass circuit. The current adjustment circuit may adjust the amount of current consumed differently in different embodiments. For instance, in one implementation the current adjustment circuit is configured to adjust power consumed by the comparison circuit by limiting current provided from the voltage supply to the comparison circuit.

In some embodiments, the voltage regulator circuit includes a charge pump 108 configured to power the comparison circuit 102. The charge pump is configured to generate a higher voltage from a lower supply voltage. When the supply voltage (Vin) falls below a lower threshold charge pump 108 is connected to provide a higher voltage to power the comparison circuit 102. In this manner, the comparison circuit may operate at an even lower input voltage level (Vin) before dropping out.

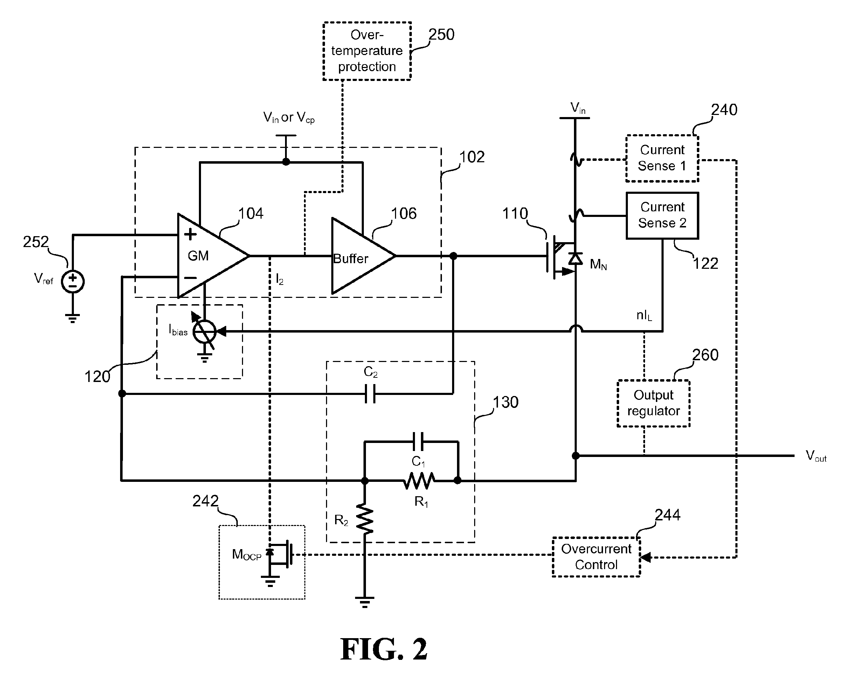

FIG. 2 shows a block diagram of a second voltage regulator circuit in accordance with one or more embodiments of the present disclosure. The voltage regulator circuit includes a comparison circuit 102, pass circuit 110, and feedback circuit 130, and current adjustment circuit (120, 122) arranged as described with reference to FIG. 1.

The feedback circuit 130 is configured to provide feedback from an output (Vout) of the voltage regulator circuit, and from an output of the comparison circuit, to an input of the comparison circuit. As shown in FIG. 2, in some embodiments, the feedback circuit includes first and second resistors (R1 and R2) arranged in a resistor divider network. A voltage from an output node of the resistor divider network (connection between resistors R1 and R2) is provided as feedback to the second input (-) of the comparison circuit 102.

In this example, the feedback circuit includes a first capacitor C1 connected to provide a feedback path from the output (Vout) of the voltage regulator circuit to the second input of the comparison circuit. The feedback circuit also includes a second capacitor C2 providing a feedback path from the output of the comparison circuit 102 to the input of the comparison circuit. This capacitor arrangement assists to provide superior stability in comparison to typical voltage regulator circuits. This arrangement allows smaller capacitors to be used, which can be integrated in an IC, to be used for frequency compensation, thereby reducing manufacturing cost. As one illustrative example, a voltage regulator circuit operating to regulate an input voltage ranging from 4-28V, to produce a regulated output voltage (*e.g.*, 1-2V), C1 and C2 may be on the order of 1 pF (C1 may be slightly bigger than C2 in some applications). The total resistance of the voltage divider network (R1+R2) may be, *e.g*., approximately 5 MOhms. As discussed with reference to FIG. 1, a charge pump (*e.g.*, 108) may be included to boost the supply voltage used to power the comparison circuit (*e.g.*, by 4-8 volts). The above circuit values are provided for purposes of illustration and not limitation. It is understood that other values may be used as required for various applications.

In some embodiments, the voltage regulator circuit may include a number of optional components (shown with dotted lines). For example, in some embodiments, the voltage regulator circuit includes an over-current protection circuit (*e.g.*, 240, 242, 244) configured to prevent over current through the pass circuit that may damage the voltage regulator circuit. For instance, in the voltage regulator circuit shown in FIG. 2, current through the pass circuit is monitored by current sense circuit 240 and provided to over current control circuit 244. The over current control circuit 244 is configured to cause adjustment circuit 242 (*e.g.*, FET) to drain voltage of the output of the transconductance amplifier 104 in response to the monitored current exceeding an upper threshold current. Reducing the voltage at the output of the transconductance amplifier 104 reduces the voltage of error signal and causes the pass circuit 110 to reduce the amount of current passed.

In some embodiments, the voltage regulator circuit includes an over-temperature control circuit 250 configured to prevent the voltage regulator circuit from operating in temperature ranges that may damage circuits of the voltage regulator circuit. For instance, in one example implementation, the over-temperature control circuit 250 is configured to adjust the error signal to disable the pass gate in response to the temperature exceeding a threshold temperature. In another example implementation, the over-temperature control circuit 250 is configured to cause a switch (not shown) to disconnect the voltage regulator circuit from the power supply. Other implementations may be used as well.

In some embodiments, the voltage regulator circuit includes an output regulator 260. The output regulator 260 provides a current sink that improves performance of the voltage regulator circuit. In the situation where load current abruptly decreases (*e.g.*, to zero amps), current drawn by the output regulator helps to maintain a more consistent voltage.

In some embodiments, the voltage regulator circuit includes a reference voltage generator circuit 252 that is configured to provide the reference voltage to the first input (+) of the comparison circuit 102. Alternatively, in some embodiments, the reference voltage provided to the first input (+) of the comparison circuit 102 may be generated by a circuit that is not included in the same package as the voltage regulator circuit.

Further, in some embodiments, the voltage regulator circuit in FIG. 2 includes a charge pump (not shown). As discussed with reference to FIG. 1, the charge pump (*e.g.*, 108) is configured to provide either a supply voltage (Vin) or a higher voltage (Vcp) to power the comparison circuit 102. For instance, when the supply voltage (Vin) falls below a lower threshold, charge pump is connected to provide a higher voltage to power the comparison circuit.

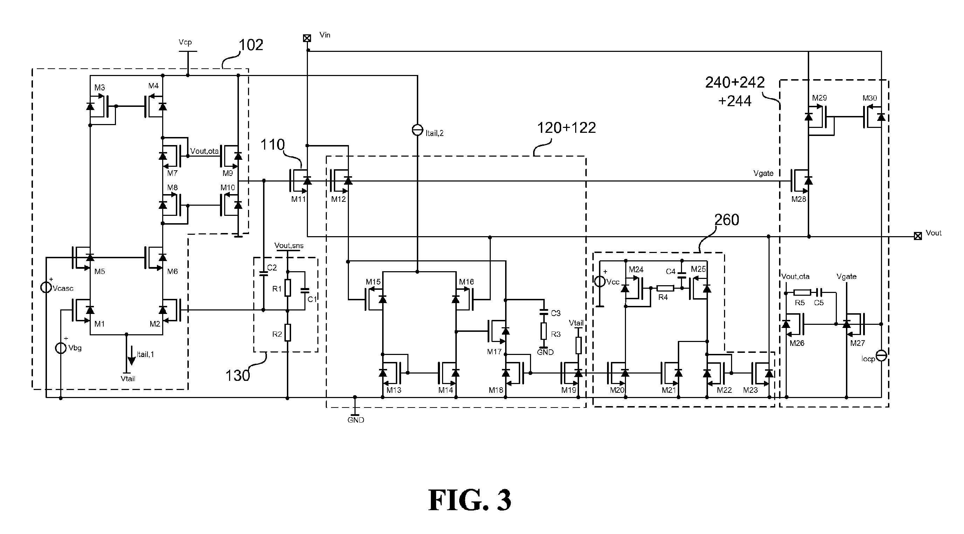

FIG. 3 shows a detailed diagram of an example circuit that may be used to implement a voltage regulator circuit regulator having some of the various circuits shown in FIG. 2. Circuits used to implement the various circuits in FIG. 2 are identified with dashed boxes and references numbers. For instance, the comparison circuit 102 shown in FIG. 2 may be implemented with the circuit formed by FETs M1-M10. More specifically, amplifier 104 may be implemented by the circuit formed by FETs M1-M6 and buffer 106 may be implemented by the circuit formed by FETs M7-M10. In this example, pass circuit 110 is implemented by N-type FET M11 and feedback path 130 may be implemented by the circuit formed by R1, R2, C1, and C2. Current adjustment circuit (120, 122) is implemented by the circuit formed by FETs M12-M19. Output regulator circuit 260 is implemented by the circuit formed by FETs M20-M25. Over current control circuit (240, 242, 244) is implemented by the circuit formed by FETs M26-M30. It is understood that the various components of the voltage regulator circuit discussed herein may be implemented using different circuits than those shown in FIG. 3.

Various aspects of the present disclosure may be applied to implement a number of types of voltage regulator circuit including, *e.g.*, linear regulators, low drop-out (LDO) regulators, and switching regulators. Linear regulators include one or more components (*e.g.*, FETs) that are operated in saturation region to maintain a regulated output voltage, while an unregulated voltage supply remains above a dropout voltage. One particular type of linear regulator, known as a LDO regulator is characterized by an ability to operate until the unregulated voltage supply reaches a low drop-out voltage that is close to the regulated output voltage. Switching regulators, rapidly connect and disconnect a power supply to an output as required to maintain a relatively constant output voltage. It is understood that aspects of the present disclosure may be applied to other types of voltage regulators as well.

Various blocks, modules or other circuits may be implemented to carry out one or more of the operations and activities described herein and/or shown in the figures. In these contexts, a "block" (also sometimes "logic circuitry" or "module") is a circuit that carries out one or more of these or related operations/activities (*e.g.*, comparison of signals, generation of signals, buffering, or amplification). For example, in certain of the above-discussed embodiments, one or more modules are discrete logic circuits or programmable logic circuits configured and arranged for implementing these operations/activities, as in the circuit modules shown in FIGs. 1-3. In certain embodiments, such a programmable circuit is one or more computer circuits programmed to execute a set (or sets) of instructions (and/or configuration data). The instructions (and/or configuration data) can be in the form of firmware or software stored in and accessible from a memory (circuit). As an example, first and second modules include a combination of a CPU hardware-based circuit and a set of instructions in the form of firmware, where the first module includes a first CPU hardware circuit with one set of instructions and the second module includes a second CPU hardware circuit with another set of instructions.

Based upon the above discussion and illustrations, those skilled in the art will readily recognize that various modifications and changes may be made to the various embodiments without strictly following the exemplary embodiments and applications illustrated and described herein. For example, various aspects discussed herein may be combined in various combinations to form different embodiments. Such modifications do not depart from the true spirit and scope of various aspects of the present disclosure, including aspects set forth in the claims.

## Claims

1. An integrated circuit (IC) configured and arranged with a voltage regulator circuit, the voltage regulator circuit comprising:
a comparison circuit configured and arranged to provide a signal at an output based on a comparison of a first input coupled to a reference voltage and a second input;
a pass circuit including a field effect transistor (FET) having a gate coupled to the output of the comparison circuit;
a feedback path configured and arranged to provide feedback from an output of the pass circuit to the second input of the comparison circuit; and
a current adjustment circuit configured and arranged to adjust current consumed by the comparison circuit based on a current passed by the pass circuit.

2. The IC of claim 1, wherein the comparison circuit includes:
a transconductance amplifier having first and second inputs connected to the first and second inputs of the comparison circuit; and
a buffer and level shifting circuit configured and arranged to buffer and adjust a voltage level of a signal provided from an output of the comparison circuit.

3. The IC of claim 1, wherein the feedback path is further configured and arranged to provide feedback from an input of the pass circuit to the second input of the comparison circuit.

4. The IC of claim 1, wherein the feedback path includes:
a first capacitor having a first terminal coupled to the output of the comparison circuit and a second terminal coupled to the second input of the comparison circuit.
a second capacitor having a first terminal coupled to the output of the pass circuit and a second terminal coupled to the second input of the comparison circuit.

5. The IC of claim 4, wherein the feedback path further includes:
a first resistive path having a first end coupled to the output of the pass circuit and a second end coupled to the second input of the comparison circuit; and
a second resistive path having a first end coupled to the second input of the comparison circuit and a second end coupled to a common reference voltage.

6. The IC of claim 2, wherein the current adjustment circuit is configured and arranged to adjust current consumed by the comparison circuit by limiting a tail current of the transconductance amplifier.

7. An integrated circuit (IC) configured and arranged with a voltage regulator circuit, the voltage regulator circuit comprising:
a comparison circuit configured and arranged to provide a signal at an output based on a comparison of a first input coupled to a reference voltage and a second input;
a pass circuit including a field effect transistor (FET) having a gate coupled to the output of the comparison circuit; and
a feedback path configured and arranged to provide feedback to a second input of the comparison circuit, the feedback path including:
a first capacitor coupled to provide feedback from an output of the pass circuit to the second input; and
a second capacitor coupled to provide feedback from an output of the comparison circuit to the second input.

8. The IC of claim 7, wherein the feedback path further includes a voltage divider network having an input coupled to the output of the pass circuit and an output coupled to the second input of the comparison circuit.

9. The IC of claim 7, wherein the comparison circuit includes:
a transconductance amplifier having first and second inputs connected to the first and second inputs of the comparison circuit; and
a buffer and level shifting circuit configured and arranged to buffer and adjust a voltage level of a signal provided from an output of the comparison circuit.

10. The IC of claim 2 or 9, further comprising an over-current protection circuit configured to sink current from the output of the transconductance amplifier based on the current passed by the FET of the pass circuit.

11. The IC of claim 9, further comprising a current adjustment circuit configured and arranged to adjust current consumed by the comparison circuit by limiting a tail current of the transconductance amplifier.

12. The IC of claim 1 or 7, wherein the FET of the pass circuit is an NMOS FET.

13. The IC of claim 1 or 7, further comprising: a control circuit configured and arranged to monitor a temperature of the voltage regulator circuit and disable the voltage regulator circuit in response to the temperature exceeding a threshold temperature.

14. The IC of claim 7, further comprising: a charge pump circuit configured and arranged to generate a higher voltage from a lower supply voltage and provide the higher voltage to power the comparison circuit.

15. The IC of claim 14, further comprising: a control circuit configured and arranged to disable the comparison circuit and charge pump circuit in response to a disable signal.
